# EUROPÄISCHE PATENTSCHRIFT

(11) **EP 3 234 442 B1**
(45) Veröffentlichungstag und Bekanntmachung des Hinweises auf die Patenterteilung: **25.04.2018**
(21) Anmeldenummer: 15820473.5
(22) Anmeldetag: 17.12.2015
(51) Int. Cl.: F16P 3/14

(54) **VERFAHREN ZUR ÜBERWACHUNG EINES KOORDINATENMESSGERÄTS**
METHOD FOR MONITORING A COORDINATE MEASURING DEVICE
PROCÉDÉ DE SURVEILLANCE D'UN APPAREIL DE MESURE DE COORDONNÉES

(30) Priorität: 19.12.2014 DE 102014226691
(43) Veröffentlichungstag der Anmeldung: 25.10.2017
(73) Patentinhaber: Carl Zeiss Industrielle Messtechnik GmbH, 73447 Oberkochen (DE)
(72) Erfinder: RUCK, Otto, 73479 Pfahlheim (DE); UHL, Peter, 73485 Unterschneidheim (DE)
(74) Vertreter: Patentanwälte Bressel und Partner mbB
(86) Internationale Anmeldenummer: PCT/EP2015/080217
(87) Internationale Veröffentlichungsnummer: WO 2016/097142

(56) Entgegenhaltungen:
- EP-A1- 2 685 150
- EP-A2- 1 306 603
- EP-A2- 2 783 797
- DE-B3-102005 003 322

## Beschreibung

Die vorliegende Erfindung betrifft ein Verfahren zur Überwachung eines Koordinatenmessgeräts und ein Koordinatenmessgerät, mit dem das Verfahren durchführbar ist.

Moderne Koordinatenmessmaschinen verwenden hohe Bewegungsgeschwindigkeiten, zum Beispiel von Portalen, damit die Messleistung stetig verbessert werden kann. Entsprechend hohe kinetische Energien beweglicher Teile treten dabei auf, wodurch das Verletzungsrisiko für Personen, wie Bedienpersonal, steigt, wenn die Maschine frei zugänglich bleiben soll.

Durch eine Verminderung der Masse beweglicher Teile lassen sich die regelmäßig sinkenden Grenzwerte der zulässigen Energie nicht immer einhalten. Durch die höher werdenden Geschwindigkeiten beweglicher Teile kann auch nicht mehr, wie bei langsamen Geschwindigkeiten, die vorhandene Fluchtmöglichkeit von Personen bei Gefahr in der Gefahrenanalyse berücksichtigt werden. Die einzig akzeptable Möglichkeit, dieses Problem zu lösen, besteht darin, den Menschen von der Maschine fernzuhalten bzw. die Maschine nur mit geringer Geschwindigkeit zu bewegen, wenn sich Menschen im Gefahrenbereich aufhalten.

Bei Werkzeugmaschinen oder Robotern werden als kostengünstige Lösungen in der Regel mechanische Abschrankungen oder Kabinen verwendet, um Mensch und Maschine sicher auf Abstand zu halten. Muss eine Person den Gefahrenbereich betreten, werden die betroffenen Maschinen stillgesetzt, um jegliche Gefährdung zu verhindern, da diese Maschinen auch bei langsamen Bewegungen aufgrund ihrer hohen Antriebskräfte niemals ungefährlich sein können.

Die EP 2783797 A2 offenbart einen Roboter mit einem betätigbaren Arbeitsarm. Eine Bewegungsgeschwindigkeits-Erfassungseinheit ist konfiguriert, eine Bewegungsgeschwindigkeit des Arbeitsarms zu erfassen. Eine Bereichseinstellungseinheit setzt einen Bereich mit einem vorbestimmten Umfang um den Roboter. Eine Erfassungseinheit für einen bewegten Körper ist konfiguriert, die Position des sich bewegenden Körpers außer dem Roboter zu erfassen. Eine Abnormalitäts-Bestimmungseinheit ist so konfiguriert, dass sie eine Abnormalität bei der Erfassung der Position des sich bewegenden Körpers innerhalb des Bereichs bestimmt, wobei die Bereichseinstellungseinheit den Umfang des Bereichs entsprechend der Bewegungsgeschwindigkeit des Arbeitsarms ändert.

Bei kleinen und mittleren Koordinatenmessgeräten in Portal- und Horizontalarmbauweise kann die Antriebskraft vermindert werden, sodass die Verletzungsgefahr reduziert wird und somit Menschen an der Maschine arbeiten können, während sich das Gerät bewegt. Diese Betriebsart ist in der Messtechnik sehr wichtig, da oftmals in der Einlernphase von Werkstücken oder bei der manuellen Messung die Anwesenheit der Bediener an der Messmaschine erforderlich ist.

Neben vielen anderen Lösungen zur Absicherung eines Gefahrenbereiches werden im Stand der Technik Kameras eingesetzt.

DE 199 38 639 A1 betrifft eine Vorrichtung zur Absicherung eines Gefahrenbereichs, insbesondere des Gefahrenbereichs einer automatisiert arbeitenden Maschine. Die Vorrichtung besitzt Mittel zum Erzeugen einer optisch überwachten virtuellen Barriere sowie Mittel zum ,Erzeugen eines Schaltsignals zum Anhalten der Maschine bei einem Durchbrechen der Barriere. Die ersten Mittel weisen eine Bildaufnahmeeinheit sowie ein definiertes Ziel auf, dessen Abbild die Bildaufnahmeeinheit aufnimmt. Die zweiten Mittel besitzen eine Vergleichseinheit, die das aufgenommene Abbild mit einer für ein Referenzbild charakteristischen Größe vergleicht.

Die DE 100 26 710 A1 betrifft eine optoelektronische Schutzeinrichtung mit zumindest einer Kamera zur Aufnahme von Bildern eines Schutzbereiches und einer dieser zugeordneten Auswerteeinheit zur Verarbeitung der aufgenommenen Bilder und zur Auslösung einer Reaktion in Abhängigkeit von einem detektierten Ereignis. Weiterhin ist zumindest eine der Kamera zugeordnete Strahlungsquelle vorhanden sowie zumindest ein den Schutzbereich begrenzenden Reflektor.

Nachteilig bei diesen Sicherheitseinrichtungen ist, dass eine gesamte Maschine im gesamten Bewegungsbereich beweglicher Teile als gefährlich betrachtet wird. Wird eine Sicherheitseinrichtung angesprochen, so wird die Maschine immer verlangsamt oder sogar stillgesetzt, auch wenn dies in der aktuellen Situation nicht notwendig wäre.

Eine Aufgabe der vorliegenden Erfindung besteht darin, für dieses Problem eine Lösung anzugeben. Insbesondere sollte ein Verfahren zur Überwachung eines Koordinatenmessgeräts angegeben werden, mit dem dieses Problem gelöst werden kann.

Nach einer grundlegenden Idee der Erfindung wird ein überwachter Ortsbereich, der ein potentieller Gefahrenbereich ist, in seiner Größe verändert bzw. veränderlich gestaltet. Die Größe des Ortsbereiches wird daran angepasst, wie die relative Position und/oder die Bewegung ein bewegliches Teil eines Koordinatenmessgeräts (nachfolgend KMG), insbesondere ein verfahrbares Portal, relativ zu dem Ortsbereich ist, insbesondere wie weit ein bewegliches Teil von dem Ortsbereich entfernt ist. Anders ausgedrückt wird die Größe des überwachten Ortsbereichs davon abhängig gesteuert, wie die relative Position und/oder die Bewegung, insbesondere die Bewegungsrichtung, Beschleunigung und/oder Bewegungsgeschwindigkeit, des beweglichen Teils relativ zu dem Ortsbereich ist. Befindet sich das bewegliche Teil in einer Position in der Nähe des Ortsbereichs, so kann der überwachte Ortsbereich, der ein Flächenbereich oder ein Raumbereich sein kann, beispielsweise vergrößert werden. Befindet sich das bewegliche Teil in einer von dem Ortsbereich relativ entfernten Position, so kann der überwachte Ortsbereich beispielsweise verkleinert werden. Die Position des beweglichen Teils relativ zu dem Ortsbereich kann bezüglich einer sogenannten Fixposition ermittelt werden, die dem Ortsbereich zugeordnet ist. Die Fixposition ist eine Referenz zur Feststellung der Position und/oder die Bewegung relativ zu dem Ortsbereich. Es kann die Position und/oder die Bewegung des beweglichen Teils des KMG relativ zu der Fixposition, die in ihrer Lage unveränderlich ist, ermittelt werden. Die Fixposition kann beispielsweise in Ortskoordinaten innerhalb eines Koordinatensystems des KMG (Gerätekoordinatensystem) angegeben werden. Die Fixposition kann innerhalb des größenveränderlichen Ortsbereiches liegen oder außerhalb, liegt vorzugsweise aber zumindest in der Nähe des Ortsbereiches. Die Fixposition dient der eindeutigen Bestimmung der relativen Position und/oder Bewegung des beweglichen Teils des KMG relativ zu den überwachten oder zu überwachenden Ortsbereich. Die Fixposition ist insbesondere durch ein geometrisches Merkmal gekennzeichnet. Die Fixposition kann durch eine Markierung gekennzeichnet sein, wobei die Markierung auch verschiedenste Weise erfassbar oder detektierbar sein kann, beispielsweise optisch.

Dadurch, dass der Ortsbereich bzw. Gefahrenbereich in seiner Größe veränderlich ist, kann ein aktueller Gefahrenbereich ermittelt oder festgelegt werden, der zu überwachen ist. Andere Bereiche, die außerhalb eines aktuellen Gefahrenbereiches liegen, können bei der Überwachung zumindest zeitweise oder gänzlich vernachlässigt bzw. ausgeblendet werden oder kleinräumiger überwacht werden. Diese anderen Bereiche sind beispielsweise Bereiche, die zumindest zeitweilig in ausreichendem Abstand zu dem beweglichen Teil des KMG sind und dann nicht überwacht werden müssen oder zumindest kleinräumiger oder kleinflächiger überwacht werden können. Ein aktueller Gefahrenbereich ist insbesondere ein Bereich in unmittelbarer Nähe des beweglichen Teils des KMG. Dort besteht die höchste Verletzungsgefahr für Personen. In von beweglichen Teilen weiter entfernten Ortsbereichen besteht keine oder weniger Gefahr für Personen, da die Entfernung zu dem beweglichen Teil ausreichend groß ist.

Mit der erfindungsgemäßen Lösung wird somit nicht der gesamte Bewegungsbereich eines beweglichen Teils des KMG als gefährlich betrachtet und überwacht, sondern es wird, wie oben gesagt, die Größe des überwachten Bereiches abhängig von der Position und/oder der Bewegung des beweglichen Teils relativ zu dem Bereich oder relativ zu einer dem Bereich zugeordneten Fixposition gewählt. Diese Lösung hat zudem den Vorteil, dass die Größe beobachteter Bereiche minimiert werden kann, insbesondere nur auf aktuelle Gefahrenbereiche. Dadurch wird eine anfallende Datenmenge bei der Überwachung minimiert.

Nach einer weiteren grundlegenden Idee der Erfindung wird festgestellt, beispielsweise mit einer noch zu beschreibenden Überwachungseinrichtung, ob sich eine Person in dem überwachten Ortsbereich aufhält. Es kann dann der Abstand des beweglichen Teils des KMG zu dem Ortsbereich festgestellt werden und/oder eine Bewegung des beweglichen Teils relativ zu dem Ortsbereich festgestellt werden. Weiterhin kann die Bewegung, insbesondere die Bewegungsgeschwindigkeit und/oder Beschleunigung, des beweglichen Teils in Abhängigkeit von dem Abstand und/oder der Bewegung des beweglichen Teils relativ zu dem Ortsbereich gesteuert werden, wenn ein Aufenthalt einer Person in dem überwachten Ortsbereich festgestellt wird. Der Abstand und/oder die Bewegung des beweglichen Teils relativ zu dem Ortsbereich kann anhand eines bereits erwähnten Fixpunktes festgestellt werden. Diese Erfindungsidee ist eine selbständige Lösung, kann aber auch mit der vorangegangenen Idee kombiniert werden, bei der die Größe des überwachten Ortsbereichs abhängig von dem Position und/oder der Bewegung des beweglichen Teils relativ zu dem Ortsbereich, insbesondere zu dem Fixpunkt, verändert wird. Bei dieser Idee der Erfindung wird erkannt, ob sich im aktuellen Gefahrenbereich der Maschine Personen befinden. Ist dies der Fall, kann die Geschwindigkeit eines beweglichen Teils auf einen maximal zulässigen Wert begrenzt werden oder die Bewegung des beweglichen Teils angehalten bzw. gestoppt werden.

Mit der vorliegenden Erfindung werden je nach Ausführungsform einer oder mehrere der nachfolgenden Vorteile erzielt:
- Vorhandene Elemente eines KMG können für das erfindungsgemäße Verfahren genutzt werden, wie insbesondere eine vorhandene Steuerung und/oder eine vorhandene Recheneinheit, auch bezeichnet als Auswertungsrechner. Insbesondere kann eine Steuerung und/oder eine Recheneinheit als Teil der Überwachungseinrichtung genutzt werden, insbesondere zur Überwachung eines Ortsbereiches variabler Größe und/oder zur Überwachung, ob eine Person oder ein Gegenstand in einem überwachten Ortsbereich anwesend ist. Man kann durch Verwendung einer bereits vorhandenen Recheneinheit des KMG eine Datenreduktion und damit verbundene Einsparungen erzielen. Daten einer Überwachungseinrichtung, beispielsweise Bilddaten zumindest einer Kamera, können aufbereitet werden, um die Datenmenge zu reduzieren. Eine Datenreduktion ist vorteilhaft, wenn die Daten in Echtzeit verarbeitet werden sollen. Eine Datenreduktion kann mit Hilfe von Auswertungsalgorithmen oder Checksummen erfolgen, insbesondere im Fall von Bilddaten. Durch die Verwendung bereits vorhandener Komponenten eines KMG kann eine kostengünstige Lösung zur Überwachung des KMG erzielt werden.
- Das erfindungsgemäße Verfahren kann ein zusätzliches Verfahren zur Steuerung einer Geschwindigkeit beweglicher Teile des KMG sein, zusätzlich zu weiteren Sicherheitseinrichtungen oder Sicherungsmechanismen des KMG. Ein KMG kann bereits Einrichtungen zur Überwachung der Geschwindigkeit und zur Kraftbegrenzung beweglicher Teile aufweisen, mit denen sichergestellt werden kann, dass das KMG bzw. dessen beweglichen Teile mit geringer Geschwindigkeit sicher betrieben werden dürfen. Hinzutreten kann das erfindungsgemäße Verfahren, mit dem eine Bewegung eines beweglichen Teils zusätzlich gesteuert werden kann. Mit dem erfindungsgemäßen Verfahren kann eine Steuerung bzw. Einstellung einer Geschwindigkeit oberhalb dieser geringen Geschwindigkeit, die auch als Mindestgeschwindigkeit bezeichnet werden kann, erfolgen. Wie noch in dieser Beschreibung erläutert, kann eine Geschwindigkeitseinstellung auf maximale Geschwindigkeit, oder zumindest auf eine höhere Geschwindigkeit, erfolgen, wenn beispielsweise ein bewegliches Teil relativ zu einem Ortsbereich einen Mindestabstand aufweist, auch wenn in dem überwachten Ortsbereich, der zudem in seiner Größe variabel ist, die Anwesenheit einer Person festgestellt wird. Durch das erfindungsgemäße Verfahren wird daher ein dynamisches Überwachungsverfahren mit erweitertet Geschwindigkeitsfreigabe bereitgestellt.

Insbesondere wird von der Erfindung ein Verfahren zur Überwachung eines KMG angegeben, wobei ein Koordinatenmessgerät eingesetzt wird, welches eine Überwachungseinrichtung aufweist, die zur Überwachung zumindest eines Ortsbereichs des KMG eingerichtet ist, in welchen ein bewegliches Teil des KMG bewegbar ist, wobei das Verfahren aufweist:
- Überwachen des zumindest einen Ortsbereiches mit der Überwachungseinrichtung, wobei der überwachte Ortsbereich in seiner Größe veränderlich ist,
- Feststellen der Position des beweglichen Teils des KMG relativ zu einer dem Ortsbereich zugeordneten Fixposition und/oder feststellen der Bewegung des beweglichen Teils relativ zu der Fixposition,
- Einstellen oder Verändern der Größe des überwachten Ortsbereiches abhängig von der Position und/oder der Bewegung des beweglichen Teils relativ zu der Fixposition.

Das bewegliche Teil des KMG kann ein translatierbares und/oder rotierbares Teil sein, insbesondere ein verfahrbares oder verschwenkbares Teil. Das bewegliche Teil ist insbesondere ein Teil eines Messsystems des KMG. Vorzugsweise ist das bewegliche Teil ein verfahrbares Portal, eine verfahrbare Brücke oder ein verfahrbarer Arm. Das KMG ist beispielsweise ein KMG in Portalbauweise, ein KMG in Gantry-Bauweise oder ein KMG in Horizontalarm-Bauweise.

Bei dem Feststellen der Position des beweglichen Teils kann der Abstand des beweglichen Teils relativ zu der Fixposition festgestellt werden. Bei dem Feststellen der Bewegung kann insbesondere die Bewegungsrichtung, die Bewegungsgeschwindigkeit und/oder die Beschleunigung festgestellt werden.

Die Fixposition kann eine virtuelle Position sein, die innerhalb eines Koordinatensystems, insbesondere eines Gerätekoordinatensystems des KMG bestimmbar ist, vorzugsweise hinsichtlich zumindest einer Ortskoordinate bestimmbar ist. Die Fixposition kann mit Kennzeichnungsmitteln gekennzeichnet sein, beispielsweise visuell gekennzeichnet sein. Beispielsweise ist die Fixposition eine Position einer nachfolgend noch beschriebenen Zielstruktur, die Teil einer Überwachungseinrichtung sein kann.

Eine für das Verfahren einsetzbare beispielhafte Überwachungseinrichtung ist an anderer Stelle dieser Beschreibung anhand eines erfindungsgemäßen Koordinatenmessgeräts detailliert beschrieben. Die Überwachungseinrichtung weist vorzugsweise zumindest eine Bildaufnahmeeinheit auf, mit welcher der zumindest eine Ortsbereich überwachbar ist. Eine beispielhafte Bildaufnahmeeinheit ist eine Kamera. Es kann mit der Bildaufnahmeeinheit ein Ortsbereich veränderlicher Größe auf verschiedene Art und Weise überwacht werden. Beispielsweise kann der Bildausschnitt, der mit der Bildaufnahmeeinheit überwacht wird, eingestellt oder auf eine gewünschte Größe angepasst werden oder es kann in einer anderen Variante ein Ausschnitt eines aufgenommenen Bildes überwacht und/oder ausgewertet werden. Eine solche Auswertung eines Bildausschnittes kann mit einer Recheneinheit erfolgen. Die Recheneinheit kann beobachtete Bereiche eines Bildes, die der Größe eines zu überwachenden Ortsbereichs entsprechen, auswerten.

Es ist in einer Variante des Verfahrens vorgesehen, dass die Größe des überwachten Ortsbereiches mit zunehmendem Abstand des beweglichen Teils zu der Fixposition verringert wird, wobei eine Verringerung des überwachten Ortsbereiches auf null erfolgen kann, oder die Größe des überwachten Ortsbereiches mit abnehmendem Abstand des beweglichen Teils zu der Fixposition vergrößert wird. In dieser Variante wird berücksichtigt, dass bei zunehmenden Abstand des beweglichen Teils des KMG die Gefahr für Personen verringert wird. In entsprechender Weise wird die Größe des zu überwachenden Ortsbereichs mit zunehmenden Abstand des beweglichen Teils zu der dem Ortsbereich zugeordneten Fixposition verringert. Im Extremfall muss ein Ortsbereich überhaupt nicht mehr überwacht werden und kann auf null verringert werden. Eine Verringerung des überwachten Ortsbereiches auf null kann bedeuten, dass ein Ortsbereich zwar prinzipiell noch vorhanden ist, er aber nicht mehr überwacht wird. In umgekehrter Weise kann die Größe des überwachten Ortsbereiches mit abnehmenden Abstand des beweglichen Teils zu der diesem Ortsbereich zugeordneten Fixposition vergrößert werden. Dies trägt der Tatsache Rechnung, dass bei abnehmenden Abstand des beweglichen Teils die Gefahr einer Kollision mit einer Person vergrößert wird.

Bei der Einstellung der Größe des überwachten Ortsbereiches können Teile des Ortsbereichs für die Auswertung als nicht relevant gekennzeichnet werden, wenn diese für Personen abgesperrt sind und daher nicht überwacht werden müssen. Eine Absperrung für Personen kann beispielsweise durch Rückwände oder andere mechanische Schutzeinrichtungen, die neben dem KMG angeordnet sind, erfolgen. Ein weiterer beispielhafter, nicht betretbarer Bereich, der bei der Überwachung ausgespart werden kann, ist der Bereich von Einbauteilen, insbesondere Einbauteilen mit prinzipiell variablem Einbauort, zum Beispiel eines Tasterwechselmagazins.

In einer Ausführungsform des Verfahrens weist das Verfahren auf:
- Feststellen mit der Überwachungseinrichtung, ob eine Person oder ein Gegenstand in dem überwachten Ortsbereich anwesend ist,
- Steuern einer Bewegung des beweglichen Teils in Abhängigkeit von der Position und/oder der Bewegung des beweglichen Teils relativ zu der Fixposition, wenn eine Anwesenheit einer Person oder eines Gegenstandes in dem überwachten Ortsbereich festgestellt wird.

Nach der Idee dieser Ausführungsform kann bei ausreichendem Abstand des beweglichen Teils von einem Ortsbereich die Bewegung, insbesondere die Bewegungsgeschwindigkeit, des beweglichen Teils unbeeinflusst bleiben, insbesondere die Bewegungsgeschwindigkeit oder Beschleunigung maximal sein, auch wenn in dem Ortsbereich die Anwesenheit einer Person festgestellt wird. Insbesondere wird die Bewegungsgeschwindigkeit des beweglichen Teils herabgesetzt, im Extremfall bis auf Null, wenn sich das bewegliche Teil dem Ortsbereich nähert, da in diesem Fall die Gefahr eines Zusammenstoßes mit einer in dem Ortsbereich befindlichen Person ansteigt. Die Bewegungsgeschwindigkeit oder Beschleunigung kann kontinuierlich verändert werden oder in diskreten Schritten verändert werden, beispielsweise kann zwischen einer maximalen Geschwindigkeit des beweglichen Teils und einer oder mehreren im Vergleich zur Maximalgeschwindigkeit verringerten Geschwindigkeiten gewählt werden bzw. auf solche Geschwindigkeiten gesteuert werden.

Der Begriff "Bewegung" kann insbesondere folgende Größen einzeln nd in beliebiger Kombination umfassen: Bewegungsgeschwindigkeit, Bewegungsrichtung und/oder Beschleunigung.
Bei der Bewegung des beweglichen Teils kann insbesondere die Bewegungsrichtung, die Bewegungsgeschwindigkeit und/oder die Beschleunigung des beweglichen Teils berücksichtigt werden. Entsprechend kann bei Steuerung der Bewegung insbesondere gesteuert werden: die Bewegungsrichtung, die Bewegungsgeschwindigkeit und/oder die Beschleunigung.

Die Überwachungseinrichtung kann, wie bereits erwähnt, eine Bildaufnahmeeinheit aufweisen. Es kann mittels Bildanalyse festgestellt werden, ob eine Person oder ein Gegenstand in dem überwachten Ortsbereich befindlich ist. Außerdem kann, wie noch nachfolgend anhand eines erfindungsgemäßen KMG erläutert, eine Zielstruktur vorhanden sein, deren Abbild von der Bildaufnahmeeinheit aufnehmbar ist. Es kann festgestellt werden, ob die Zielstruktur in dem Abbild der Bildaufnahmeeinheit verändert wird, wenn in dem Abbild eine Veränderung der Zielstruktur erfolgt, zum Beispiel wenn sich eine Zielstruktur bewegt oder die Zielstruktur von einer Person oder einem Objekt zumindest teilweise verdeckt wird.

In einer Ausführungsform wird ein Verfahren angegeben, aufweisend
- Überwachen zumindest eines Seitenbereiches einer Basis des KMG und zumindest eines Auflagebereiches der Basis, in dem ein Werkstück platzierbar ist, wobei der Seitenbereich und der Auflagebereich Teil des Ortsbereiches sind, wenn der Ortsbereich eine entsprechende Größe aufweist,
- Steuern einer Bewegung des beweglichen Teils in Abhängigkeit davon, ob eine Anwesenheit einer Person oder eines Gegenstandes in dem Auflagebereich und/oder in dem Seitenbereich festgestellt wird.

Die Bezeichnungen Basis und Messtisch werden hierin synonym verwendet.

In einer speziellen Variante wird die Bewegungsgeschwindigkeit des beweglichen Teils verringert, wenn die Anwesenheit einer Person oder eines Gegenstandes in dem Seitenbereich festgestellt wird.

Der Begriff "Steuern der Bewegung" umfasst auch das Steuern der Bewegungsgeschwindigkeit auf null, was einem Anhalten der Bewegung des beweglichen Teils entspricht.

Der Seitenbereich einer Basis des KMG ist beispielsweise der Seitenbereich eines Messtisches (auch bezeichnet als Basis), insbesondere ein von einem Messtisch seitlich beabstandeter oder seitlich anschließender Raumbereich. Der Messtisch ist beispielsweise eine Steinplatte, die üblicherweise eine hohe Dicke und entsprechende Seitenflächen aufweist. Der Auflagebereich ist insbesondere ein Flächenabschnitt auf dem Messtisch oder ein Raumbereich oberhalb des Messtisches. Ein erster Seitenbereich kann beispielsweise an einem ersten Ende des Messtisches angeordnet sein. Ein zweiter Seitenbereich kann an einem zweiten Ende des Messtisches angeordnet sein. Das erste Ende ist insbesondere an einer ersten Querseite des Messtisches lokalisiert, das zweite Ende des Messtisches an einer zweiten Querseite, Insbesondere befindet sich ein erstes Ende des Messtisches an einem ersten Ende des Verfahrweges des Portals und ein zweites Ende an einem zweiten, entgegengesetzten Ende des Verfahrweges des Portals. Ein dritter Seitenbereich kann an einer ersten Längsseite lokalisiert sein, an der insbesondere ein Portal entlang verfährt, ein vierter Seitenbereich entlang der zweiten Längsseite des Messtisches, die der ersten Längsseite gegenüber liegt und an der insbesondere das Portal ebenfalls entlang verfährt.

Der Messtisch kann ferner mehrere Auflagebereiche aufweisen, wie beispielsweise einen ersten Auflagebereich, der insbesondere dem ersten Seitenbereich benachbart ist, einen zweiten Auflagebereich, der insbesondere dem zweiten Seitenbereich der Basis benachbart ist. Insbesondere werden ein Seitenbereich und ein Auflagebereich, die zueinander benachbart sind bzw. aneinander angrenzen, einem Ortsbereich zugeordnet und von dem Ortsbereich umfasst, wenn dieser eine entsprechende Größe aufweist. Es kann in dieser Ausführungsform differenziert werden, ob die Anwesenheit einer Person oder eines Gegenstandes in dem Auflagebereich oder dem Seitenbereich, die vorzugsweise einander benachbart sind, festgestellt wird. Beispielsweise kann im Auflagebereich ein Werkstück lokalisiert sein, was hinsichtlich einer Kollisionsproblematik mit einem beweglichen Teil des KMG unproblematisch sein kann, da die Anwesenheit des Werkstücks erwünscht und bekannt ist. Unabhängig davon kann eine Person in einem Seitenbereich, der vorzugsweise dem Auflagebereich benachbart ist, anwesend sein, was bei Bewegung des beweglichen Teils in eine Nähe der Person oder mit einer bestimmten Geschwindigkeit in Richtung der Person eine Kollisionsgefahr zur Folge hat. Durch Feststellen einer Person in dem Seitenbereich kann die Bewegung des beweglichen Teils gesteuert, insbesondere die Bewegungsgeschwindigkeit verringert werden. Befindet sich hingegen keine Person in dem Seitenbereich, sondern nur ein Werkstück in dem Auflagebereich, so ist ein Eingriff in die Bewegung, insbesondere eine Verringerung der Bewegungsgeschwindigkeit nicht erforderlich.

In einer Ausführungsform der Erfindung wird ein Verfahren angegeben, wobei mit der Überwachungseinrichtung die Position und/oder Bewegungsinformationen des beweglichen Teils des KMG ermittelt werden. In dieser Ausführungsform werden unabhängig von einer Steuerung und Recheneinheit des KMG mittels der Überwachungseinrichtung zur Überwachung des Ortsbereiches Informationen über Position und/oder Bewegung des beweglichen Teils des KMG ermittelt.

Die vorangehend genannten Informationen über Position und/oder Bewegung des beweglichen Teils des KMG können beispielsweise wie folgt verwendet werden:
In einer Ausführungsform wird mit der ermittelten Position und/oder der ermittelten Bewegungsinformation das Steuern der Bewegung des beweglichen Teils überwacht. Es wird auf Basis dieser Informationen festgestellt, ob ein zuvor erfolgtes Steuern der Bewegung des beweglichen Teils korrekt erfolgt oder erfolgte, also zu der gewünschten Bewegung führt oder führte. Wenn eine Differenz zwischen einer Steuerungsvorgabe und der ermittelten Position und/oder der ermittelten Bewegungsinformation festgestellt wird, kann ein Eingriff in die Bewegung des beweglichen Teils erfolgen. Insbesondere kann eine (erneute) Steuerung, Steuerungs(wert)änderung oder Steuerungskorrektur erfolgen. Es kann also mit dieser Variante eine Überwachung der Steuerung erfolgen.

Die Informationen über Position und/oder Bewegung des beweglichen Teils können mit den Informationen über Position und/oder Bewegung, die im KMG selbst ermittelt werden oder bekannt sind oder vorgegeben sind, verglichen werden.

Insbesondere wird ein Vergleich vorgenommen zwischen
- der mit der Überwachungseinrichtung ermittelten Position und/oder Bewegungsinformationen und
- einer in einer Steuerung des KMG ermittelten oder vorgegebenen Position und/oder in einer Steuerung des KMG ermittelten oder vorgegebenen Bewegungsinformationen.

In den Vergleich ist insbesondere ein Rechner oder eine Recheneinheit einbezogen. In einer vorteilhaften Variante wird eine Recheneinheit der Steuerung verwendet, um den Vergleich vorzunehmen. Möglich ist alternativ oder zusätzlich der Einsatz einer Überwachungseinrichtung mit eigener Recheneinheit. Ein Messrechner des KMG kann in den Vergleich ebenfalls einbezogen sein. Bei einer Verwendung mehrerer Recheneinheiten, beispielsweise derjenigen einer Steuerung und derjenigen einer Überwachungseinrichtung, wird eine redundante Auswertungs- und Vergleichsstruktur geschaffen, wodurch die Sicherheit des Verfahrens erhöht werden kann.

Die mittels der Überwachungseinrichtung gewonnene Information kann mit Soll- oder IstWerten von Position und/oder Bewegungsinformationen in der Steuerung verglichen werden. Bewegungsinformationen sind insbesondere Bewegungsrichtung, Geschwindigkeit und/oder Beschleunigung. Die Überwachungseinrichtung kann in dieser Ausführungsform des Verfahrens als redundantes System zur Ermittlung von Position und/oder Bewegungsinformationen eines beweglichen Teiles des KMG verwendet werden. Mit diesem redundanten System kann die Plausibilität der Bewegungsinformationen und/oder Positionsinformation über das bewegliche Teil, die aus dem KMG bekannt oder vorgegeben ist/sind, geprüft werden. Ist die Plausibilität nicht gegeben, liegt insbesondere eine Differenz bei dem Vergleich vor, kann die Bewegung des beweglichen Teils des KMG beeinflusst werden. Insbesondere wird die Bewegung, noch spezieller die Bewegungsgeschwindigkeit des beweglichen Teils abhängig von einer bei dem o.g. Vergleich ermittelten Differenz gesteuert. Vorzugsweise wird bei Feststellen einer Differenz die Bewegungsgeschwindigkeit des beweglichen Teils oder seine Beschleunigung verringert. In noch einer spezielleren Variante kann in Abhängigkeit der Größe einer Differenz zwischen den verglichenen Größen (Position und/oder Bewegungsinformationen) die Bewegungsgeschwindigkeit oder Beschleunigung geändert, insbesondere verringert werden. Wird bei dem Vergleich eine Differenz festgestellt, kann ein Signal an die Steuerung des KMG übermittelt werden, welches zur Verringerung der Geschwindigkeit des beweglichen Teils dient. Ergibt sich keine Differenz in dem Vergleich, so kann eine höhere Geschwindigkeit gewählt oder beibehalten werden, beispielsweise eine Maximalgeschwindigkeit, wozu ebenfalls ein Signal an die Steuerung übertragen werden kann, um die Geschwindigkeit entsprechend zu steuern.

Die Position und/oder Bewegung/Bewegungsinformation des beweglichen Teils des KMG kann beispielsweise ermittelt werden, indem zumindest eine bereits erwähnte Zielstruktur mit Hilfe einer bereits erwähnten Bildaufnahmeeinheit ausgewertet wird. Beispielsweise kann zumindest eine Zielstruktur an dem beweglichen Teil des KMG angeordnet sein und/oder es kann zumindest eine Zielstruktur den Bewegungsweg, insbesondere einen Verfahrweg, des beweglichen Teils abbilden oder in diesem Bewegungsweg angeordnet sein. Es kann die relative Lage der Zielstruktur an dem beweglichen Teil zu der Zielstruktur in dem Bewegungsweg einfach oder mehrfach (insbesondere zeitaufgelöst) ausgewertet werden. Es kann alternativ oder zusätzlich ein Größenverhältnis dieser Zielstrukturen zueinander einfach oder mehrfach (insbesondere zeitaufgelöst) ausgewertet werden, um die aktuelle Position und/oder Bewegungsinformationen des beweglichen Teils zu ermitteln. Es kann eine Bildposition des beweglichen Teils des KMG mit der Bewegungseinrichtung ermittelt werden. Mittels einer oder mehrerer Bildpositionen können Informationen zur Position und/oder zur Bewegung, wie Bewegungsrichtung, Geschwindigkeit und/oder Beschleunigung, ermittelt werden.

In einer Ausführungsform wird ein Verfahren angegeben, wobei die Überwachungseinrichtung eingerichtet ist zur Überwachung, ob eine Person einen vorgegebenen Abstand zu dem beweglichen Teil unterschreitet, und die Bewegung, insbesondere die Bewegungsgeschwindigkeit des beweglichen Teils in Abhängigkeit davon geändert wird, ob der vorgegebene Abstand unterschritten wird. In dieser Ausführungsform wird das bewegliche Teil, zusätzlich zu dem bereits erwähnten Ortsbereich, mit der Überwachungseinrichtung überwacht. Insbesondere kann an dem beweglichen Teil eine nachfolgend noch erläuterte Zielstruktur angeordnet sein. Die Zielstruktur kann mit einer bereits erwähnten Bildaufnahmeeinheit überwacht werden. Eine Unterschreitung des vorgegebenen Abstands zu dem beweglichen Teil kann dadurch festgestellt werden, dass die Zielstruktur in dem von der Bildaufnahmeeinheit aufgenommenen Bild durch eine Person zumindest teilweise verdeckt ist.

In einem weiteren Aspekt betrifft die Erfindung ein Koordinatenmessgerät, aufweisend
- eine Basis mit Seitenflächen und einer nach oben weisenden Fläche zur Aufnahme eines Werkstücks,
- zumindest ein bewegliches Teil
- eine Überwachungseinrichtung, aufweisend zumindest eine Bildaufnahmeeinheit
- zumindest eine Zielstruktur, deren Abbild von der Bildaufnahmeeinheit aufnehmbar ist, wobei das Abbild der Zielstruktur veränderbar ist, wenn in dem Abbild die Zielstruktur zumindest teilweise von einer Person oder einem Objekt verdeckt wird,
- zumindest eine Vergleichseinrichtung, die dazu eingerichtet ist, das aufgenommene Abbild mit einem Vergleichsabbild zu vergleichen, wobei das Vergleichsabbild ein Abbild ist, in dem kein Teil der Zielstruktur von einer Person oder einem Objekt verdeckt ist.

Das erfindungsgemäße KMG kann allgemein dazu eingerichtet sein, die vorangehend beschriebenen Verfahren durchzuführen. Alle anhand der vorangehend beschriebenen Verfahren beschriebenen gegenständlichen Merkmale können einzeln oder in beliebiger Kombination Merkmale des erfindungsgemäßen KMG sein.

Das erfindungsgemäße Koordinatenmessgerät kann weiterhin eine Steuerungseinrichtung aufweisen, die dazu eingerichtet ist, die Größe des überwachten Ortsbereiches zu steuern und/oder die dazu eingerichtet ist eine Bewegung des beweglichen Teils nach Maßgabe der erfindungsgemäßen, oben beschriebenen Verfahren zu steuern,
Die Steuerungseinrichtung kann dazu eingerichtet sein,
- die Größe eines überwachten Ortsbereiches zu steuern, und/oder
- eine Bewegung des beweglichen Teils in Abhängigkeit von einer Position und/oder einer Bewegung des beweglichen Teils relativ zu einer Fixposition zu steuern, wenn eine Anwesenheit der Person oder des Objekts in dem überwachten Ortsbereich festgestellt wird, und/oder
- eine Bewegung des beweglichen Teils in Abhängigkeit davon zu steuern, ob eine Anwesenheit der Person oder eines Gegenstandes in einem Auflagebereich einer Basis des KMG und/oder in dem Seitenbereich einer Basis des KMG festgestellt wird.

Obige Funktionen der Steuerungseinrichtung können zusätzlich zu Steuerungsfunktionen vorhanden sein, die für eine Steuerungseinrichtung eines KMG bekannt sind, wie z.B. Achsantrieb, Antastung, Programmierung des Messablaufs, Steuerung des Messablaufs, Datenerfassung und Auswertung. Diese Steuerungseinrichtung kann eine Steuerungseinrichtung des KMG sein, die auch für andere bekannte Steuerungsfunktionen des KMG, wie die oben genannten, eingerichtet ist.

Das erfindungsgemäße KMG kann eine Recheneinrichtung aufweisen, auch bezeichnet als Messrechner. Die Recheneinrichtung kann alternativ oder in Zusammenwirkung mit der Steuerung die oben angegebenen Aufgaben der Steuerung erfüllen.

Ein erfindungsgemäßes KMG weist insbesondere einen oder mehrere der folgenden Vorteile auf:
- Zielstrukturen, die mit der Bildaufnahmeeinheit überwacht werden können, wie beispielsweise Muster oder Streifen, sind nicht auf einem Fußboden angeordnet, sondern am KMG selbst, insbesondere an dessen Basis. Dadurch wird eine Abnutzung verringert oder vermieden.
- Durch die gezielte Platzierung von Zielstrukturen, die zu überwachen sind, können gezielt notwendige Gefahrenbereiche überwacht werden, was eine optimale Platzausnutzung bzw. Raumausnutzung im Betrieb des KMG zur Folge hat.
- Überwachungsrelevante Bereiche können gezielt ausgewählt werden und in beliebigen Kombinationen zusammengestellt werden, beispielsweise mittels einer Software, die auf einer Recheneinrichtung des KMG installiert ist. Es kann in diesem Sinne eine gezielte Anwahl von Kombinationen aus Bildaufnahmeeinheit und Zielstruktur erfolgen.

Die Bildaufnahmeeinheit ist insbesondere eine Kamera. Vorzugsweise werden mehrere Bildaufnahmeeinheiten um das KMG herum angeordnet. Bei Einsatz mehrerer Bildaufnahmeeinheiten kann eine Bildaufnahmeeinheit an einem vorderen Ende des KMG angeordnet sein und eine weitere Bildaufnahmeeinheit an einem hinteren Ende des KMG.

Bei Einsatz mehrerer Bildaufnahmeeinheiten ist es möglich, eine besonders kritische Position des KMG, die häufig betreten wird, beispielsweise eine Position für eine Person zur Beladung des KMG, mehrfach zu überwachen. Es wird dadurch eine mehrfache, redundante Positionsüberwachung bereitgestellt.

In einer Variante werden die aus mehreren Bildaufnahmeeinheiten bekannten oder mit mehreren Bildaufnahmeeinheiten ermittelten Informationen miteinander verglichen bzw. abgeglichen. Durch diesen Vergleich wird eine Erhöhung der Sicherheit erzielt. Es können insbesondere Informationen aus der oben genannten Positionsüberwachung miteinander verglichen werden. Wenn mit einer Überwachungseinrichtung, welche mehrere Bildaufnahmeeinheiten aufweist, ein Ortsbereich oder ein vorgegebener Abstand einer Person zu einem beweglichen Teil überwacht wird, können die von verschiedenen Bildaufnahmeeinheiten gelieferten Informationen miteinander verglichen werden. Zu dem Vergleich kann eine Recheneinheit einer KMG Steuerung und/oder eine Recheneinheit, die Teil der Überwachungseinrichtung ist, verwendet werden.

Die Zielstruktur kann ein geometrisches Merkmal sein. Die Zielstruktur ist insbesondere nicht identisch zu dem beweglichen Teil des KMG. Die Zielstruktur ist vorzugsweise eine Markierung. Die Markierung kann an einem Bauteil des KMG angebracht sein, beispielsweise an einer Basis und/oder einem Portal. Die Zielstruktur ist bevorzugt visuell oder optisch detektierbar. Die Zielstruktur kann beispielsweise flächig, insbesondere in Form einer flächigen geometrischen Struktur, ausgebildet sein. Spezielle Beispiele sind eine streifenförmige oder linienförmige Zielstruktur.

Die Zielstruktur kann ein an dem KMG bzw. einem Bauteil durch eine Form-, Kraft- und/oder stoffschlüssige Verbindung befestigt sein. Diese Varianten sind beliebig kombinierbar.

Die Zielstruktur kann eine Strahlungsquelle, insbesondere eine Lichtquelle aufweisen, sodass von der Zielstruktur Strahlung, insbesondere Licht ausgesendet werden kann. In einer anderen Variante kann die Zielstruktur ein retroreflektierendes Material aufweisen. In noch einer Variante kann die Zielstruktur eine lichtleitende Struktur aufweisen. Diese Varianten sind beliebig (und/oder) kombinierbar, auch mit vorangehend beschriebenen und folgenden Varianten.

Sofern die Zielstruktur eine Strahlungsquelle, insbesondere eine Lichtquelle aufweist, kann diese Strahlungsquelle schaltbar sein, insbesondere aktivierbar und deaktivierbar sein. Durch eine Aktivierung oder Deaktivierung, also durch Einschalten oder Ausschalten der Strahlungsquelle einer Zielstruktur kann geprüft werden, ob von einer Überwachungseinrichtung gelieferte Daten, insbesondere Bilder korrekt sind, d.h. den überwachte Ortsbereich korrekt wiedergeben oder korrekt abgebildet wird. Bei einer korrekten Echtzeitüberwachung muss eine Aktivierung/Deaktivierung der Strahlungsquelle erfasst werden.

Mit Hilfe der Bildaufnahmeeinheit lässt sich in Kombination mit der Zielstruktur eine virtuelle Barriere erzeugen. Das Prinzip des Zusammenwirkens aus Bildaufnahmeeinheit und Zielstruktur ist auch in der Patentanmeldung DE 199 38 639 A1 beschrieben, auf die hier Bezug genommen wird. Ebenfalls ist in dieser genannten Patentanmeldung eine Vergleichseinrichtung beschrieben. Das Vergleichsabbild kann in der Vergleichseinrichtung gespeichert sein oder extern gespeichert sein. Das Vergleichsabbild kann ein zu erwartendes Abbild sein, das mit dem aktuellen Abbild der Zielstruktur verglichen wird. Wird das Vergleichsabbild nicht erkannt, da sich z.B. ein fremdes Objekt oder eine Person im Bild befindet oder eine Zielstruktur in dem Bild verdeckt, kann ein Ausgangssignal erzeugt werden, womit eine Bewegung des beweglichen Teils gesteuert werden kann, insbesondere die Geschwindigkeit reduziert werden kann oder die Bewegung angehalten werden kann.

Zusätzlich zu der Überwachung eines Ortsbereichs oder eines Abstands einer Person zu einem beweglichen Teil des KMG kann die zumindest eine Bildaufnahmeeinheit auch zur Zustands- und Ablaufüberwachung des KMG bzw. von Prozessen des KMG verwendet werden. In einer Variante eines erfindungsgemäßen KMG sind eine oder mehrere Zielstrukturen an zumindest einer Seitenfläche der Basis angeordnet. Diese Zielstrukturen können verwendet werden, um zumindest einen Seitenbereich einer Basis des KMG zu überwachen, wie oben ausgeführt.

Nachfolgend wird beschrieben, wo vorzugsweise eine Zielstruktur angeordnet werden kann. Diese Anordnungen können in beliebiger Weise miteinander kombiniert werden, wie in Beispielen gezeigt.

In einer Ausführungsform sind eine oder mehrere Zielstrukturen auf der nach oben weisenden Fläche des Messtisches angeordnet. In dieser Ausführungsform können die Zielstrukturen verwendet werden, um einen Auflagebereich des Messtisches zu überwachen, wie oben erläutert.

Eine Zielstruktur kann insbesondere dort auf der nach oben weisenden Fläche des Messtisches angeordnet sein, wo üblicherweise ein Werkstück angeordnet wird. Durch ein im Bereich dieser Zielstrukturen platziertes Werkstück kann durch entsprechende Veränderung des Abbilds der Zielstruktur das Werkstück mit der Überwachungseinrichtung erkannt werden. Es kann dann ein Ortsbereich rund um das Werkstück als zu überwachender Ortsbereich erkannt werden. Der Raum um das Werkstück ist ein Raum, in dem bewegliche Teile des KMG, insbesondere eines Tastsystems, bewegt werden. Entsprechend ist es sinnvoll, diesen Raum rund um das Werkstück als zu überwachenden Ortsbereich zu definieren. Abhängig davon, ob ein Werkstück mit der Überwachungseinrichtung erkannt wird, kann somit ein Ortsbereich rund um das Werkstück in das Verfahren zur Überwachung des KMG einbezogen werden.

Die Zielstruktur kann im dem Bewegungsweg eines beweglichen Teils angeordnet sein, vorzugsweise auf dem Messtisch sodass bei Bewegung des beweglichen Teils die Zielstruktur teilweise oder stellenweise durch das bewegliche Teil verdeckt wird. Welcher Teil der Zielstruktur verdeckt wird, hängt von dem momentanen Ort des beweglichen Teils des KMG ab. Die Zielstruktur, oder zumindest eine von mehreren Zielstrukturen, kann einen Bewegungsweg eines beweglichen Teils ganz oder teilweise abbilden. Beispielsweise ist eine Zielstruktur im Bewegungsweg eines Portals eines KMG angeordnet.

In noch einer Ausführungsform eines erfindungsgemäßen KMG sind eine oder mehrere Zielstrukturen an dem beweglichen Teil, insbesondere an einem Portal, angeordnet. Mit Hilfe dieser Zielstrukturen an einem beweglichen Teil kann eine Überwachung erfolgen, ob eine Person einen vorgegebenen Abstand zu dem beweglichen Teil unterschreitet, wie oben erläutert.

Nachfolgend wird die Erfindung anhand von Ausführungsbeispielen beschrieben. Es zeigen:
- Fig. 1: den prinzipiellen Aufbau eines erfindungsgemäßen KMG,
- Fig. 2: ein mit Zielstrukturen versehenes KMG, welches mittels vier Bildaufnahmeeinheiten von allen Seiten her überwacht wird,
- Fig. 3: eine Ansicht des Aufbaus aus Fig. 2 von oben,
- Fig. 4: eine Ansicht des Aufbaus aus Fig. 2 von der Seite und
- Fig. 5: den schematischen Ablauf eines Verfahrens zur Überwachung eines KMG, wobei überwachte Ortsbereiche in ihrer Größe veränderlich sind.

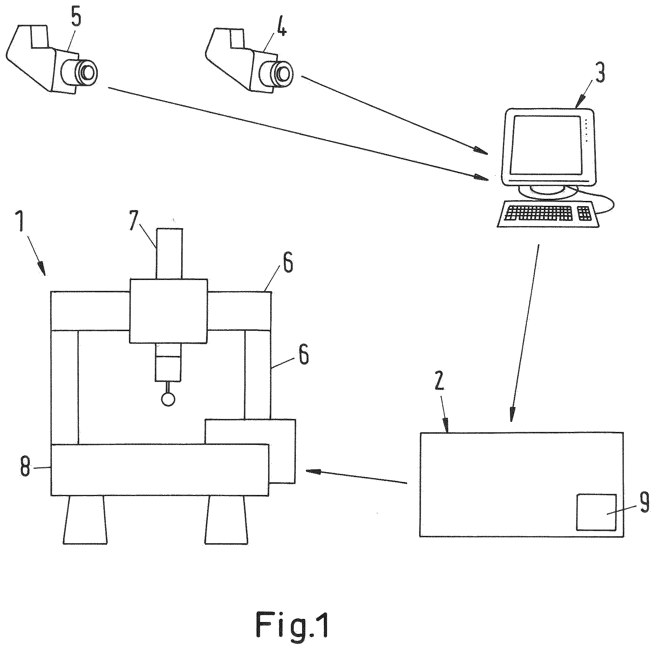

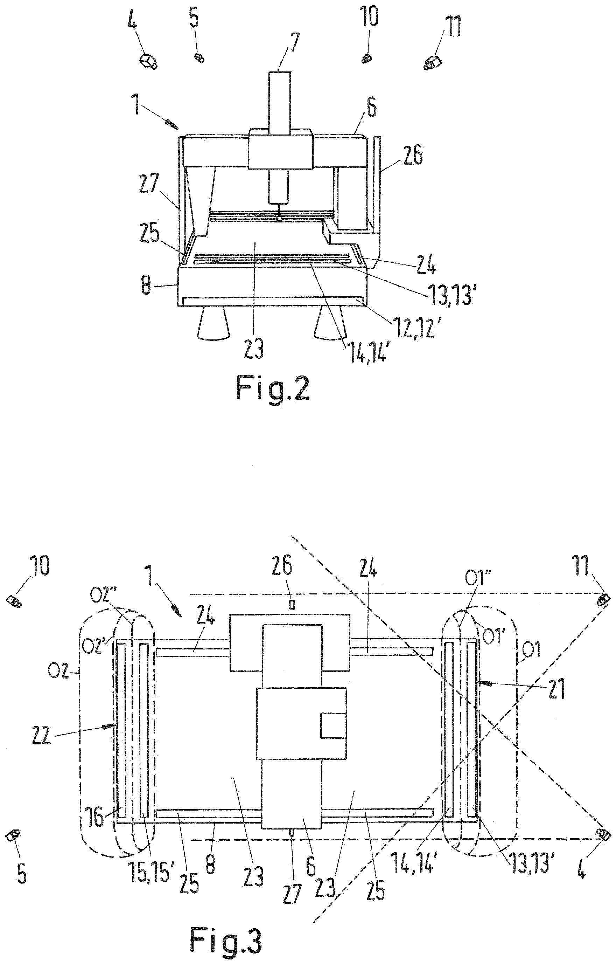

In dem Aufbau nach Fig. 1 ist ein Koordinatenmessgerät 1 in Portalbauweise gezeigt. Das KMG 1 weist die Steuerung 2 und den Messrechner 3 auf. Bildaufnahmeeinheiten 4, 5 in Form von Kameras sind an den Auswertungsrechner 3 angeschlossen, beispielsweise über USB oder LAN. Bei Verwendung handelsüblicher Kameras 4, 5 sind üblicherweise Treiber zum Betrieb mit einer Windows-Software vorhanden. Es kann mit einer einfach zu erstellenden Software die Auswahl der zu übertragenden bzw. zu überwachenden Ortsbereiche des KMG 1 bestimmt werden, es können beispielsweise die Kameras 4, 5 auf unterschiedliche Ortsbereiche des KMG gerichtet sein, wie noch anhand nachfolgender Fig. 2 bis 4 gezeigt. Die ausgewählten Ortsbereiche werden dann an die Steuerung 2 übertragen. Es kann ein gesamtes Bild in Form eines vergleichsweise großen Ortsbereichs übertragen werden oder lediglich ein Bildbereich oder Bildausschnitt, der einen relativ kleineren Ortsbereich darstellt. Die Übertragung von Bildern oder Bildausschnitten der Kameras 4, 5 erfolgt über ein vorhandenes LAN zur Steuerungseinrichtung 2, die wiederum die Bewegung der beweglichen Teile des KMG 1 steuert. Als bewegliche Teile des KMG 1 sind vorhanden: ein Portal 6, das entlang der Y-Richtung, in Blickrichtung des Betrachters, verfahrbar ist, und eine Pinole 7. Im speziellen Beispiel wird die Bewegung des Portals 6 überwacht, da die größte Kollisionsgefahr für Personen mit dem verfahrbaren Portal besteht.

Das KMG 1 weist weiterhin die Basis 8 auf.

Es ist prinzipiell auch der direkte Anschluss der Kameras 4, 5 an die Steuerung 2 möglich. Allerdings ist bei dieser Variante die Anzahl verfügbarer Kamerasysteme eingeschränkt, da die Steuerung 2 üblicherweise mit einem Echtzeitbetriebssystem betrieben wird, wofür weniger geeignete Kameratreiber verfügbar sind.

In die Steuerung 2 ist die Vergleichseinrichtung 9 integriert, mit der ein Abbild der Kamera 4, 5 mit einem Vergleichsabbild verglichen wird, wie an nachfolgenden Figuren erläutert. Die Vergleichseinrichtung 9 kann statt in die Steuerung 2 in den Rechner 3 integriert sein. Die Vergleichseinrichtung 9 kann in Form einer Software ausgeführt sein.

In der perspektivischen Ansicht der Fig. 2 sind oberhalb des KMG 1 und rund um das KMG die Kameras 4, 5, 10, 11 angeordnet. Vorzugsweise werden mehrere handelsübliche Kameras eingesetzt, insbesondere wenn nach DIN EN ISO 13849 mehrere Kameraeinheiten zum Aufbau eines diversitär-redundanten Systems verwendet werden sollen.

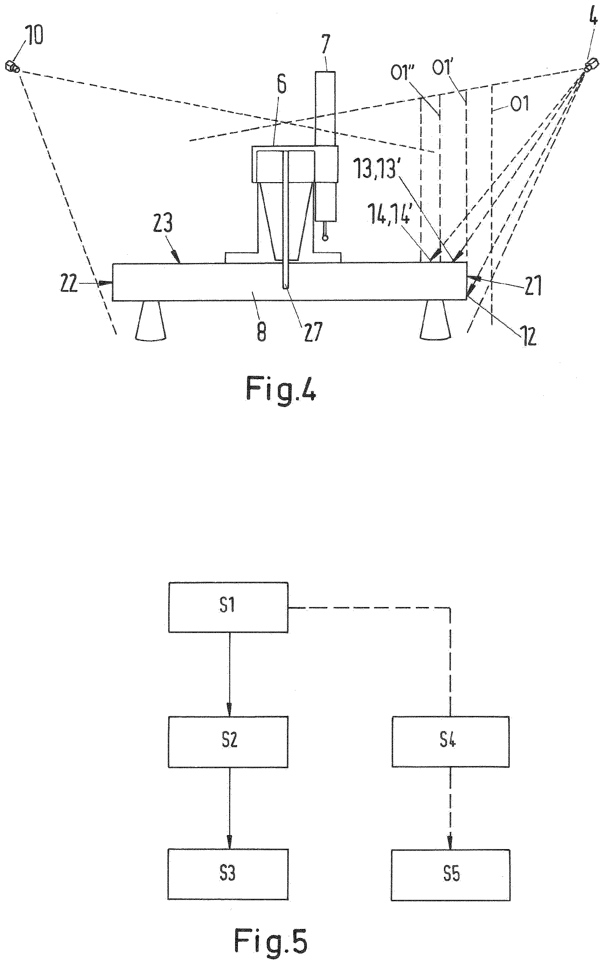

Die Kameras 4 und 11 beobachten die Quermarkierungen 12, 13, 14 und übertragen die Daten an die Steuerung 2 (siehe Fig. 1). Die Steuerung 2 erteilt eine Freigabe für eine maximale Geschwindigkeit (vₘₐₓ) an alle Maschinenachsen des KMG 1, wenn sich das Portal 6 in Richtung y+ (Verfahrrichtung des Portals in Blickrichtung nach hinten) in ausreichender Entfernung zu den Quermarkierungen 12, 13, 14 befindet. Bewegt sich das Portal in umgekehrter Richtung y-, auf den Betrachtet zu, so müssen je nach Abstand zur y- Endlage die Markierungen 14, 13 oder 12 ununterbrochen sichtbar sein, um die vₘₐₓ Freigabe zu erhalten. Dies bedeutet, dass bei ausreichendem Abstand auch dann mit vₘₐₓ gefahren werden kann, wenn z.B. die Quermarkierung 12 durch eine Person unterbrochen ist. Das Feststellen auf diese Art und Weise, ob eine Person im Bereich vor der Markierung 12 anwesend ist, ist als Schritt S4 in dem Schema der Fig. 5 dargestellt. Die Quermarkierung 12 dient zur Überwachung eines vorderen Seitenbereiches der Basis 8 des KMG. Die Quermarkierungen 13 und 14 dienen zur Überwachung eines vorderen Auflagebereiches der Basis 8 und sind dazu auf der Auflagefläche der Basis 8, also auf der nach oben weisenden Oberfläche der Basis 8, angeordnet. Es kann das Portal 6 auch dann mit vₘₐₓ bewegt werden, wenn beispielsweise die Quermarkierungen 13 und 14 durch ein darauf stehendes Werkstück (hier nicht gezeigt) unterbrochen sind, sofern die Quermarkierung 12 noch in voller Länge sichtbar bleibt, also wenn sich im vorderen Seitenbereich der Basis 8 keine Person befindet, die mit dem Portal 6 kollidieren könnte. Die Einstellung der Geschwindigkeit als Schritt S5 in dem Schema der Fig. 5 dargestellt.

Die Überwachungseinrichtung arbeitet nach dem Prinzip, dass die Quermarkierungen 12, 13, 14, die Zielstrukturen darstellen, von Kameras, hier den Kameras 4 und 11, beobachtet werden. Es wird ein Bild dieser Markierungen 12, 13, 14 aufgenommen. Das aufgenommene Bild wird verändert, wenn eine der Zielstrukturen 12, 13, 14 im Abbild einer Kamera 4, 11 zumindest teilweise von einer Person oder einem Objekt verdeckt wird. Ein Vergleichsabbild zeigt den Zustand, dass keine der Markierungen 12, 13, 14 in dieser Weise verdeckt ist. Das Vergleichsabbild kann in der in Fig. 1 gezeigten Vergleichseinrichtung 9 gespeichert sein oder in dem der Recheneinheit 3. Ein Vergleich kann entsprechend in der Steuerung 2 oder der Recheneinheit 3 stattfinden.

Das Verändern der Größe des überwachten Ortsbereiches (Schritt S3 in Fig. 5) findet beispielhaft wie folgt statt: Bewegt sich das Portal 6 in Blickrichtung des Betrachters, so wird bei noch relativ großem Abstand des Portals 6 zu dem vorderen Ende der Basis 8 nur die Quermarkierung 14 in die Überwachung einbezogen bzw. bildet nur diese den überwachten Ortsbereich. Bewegt sich das Portal 6 noch weiter in Blickrichtung des Betrachters, so wird auch die Quermarkierung 13 in den beobachteten Ortsbereich mit einbezogen, also der Ortsbereich entsprechend vergrößert. Bei noch weiter fortgesetzter Bewegung wird auch die Quermarkierung 12 mit einbezogen und somit der Ortsbereich nochmals vergrößert. Daraus ergibt sich, dass der Ortsbereich am vorderen Ende der Basis 8 vergrößert wird, je weiter sich das Portal 6 auf den vorderen Bereich der Basis 8 hinzubewegt. Analoge Markierungen 12, 13, 14 können am in Blickrichtung des Betrachters hinteren Ende der Basis angeordnet sein. Entsprechend kann durch Bewegung des Portals 6 auf den Betrachter zu ein Ortsbereich im hinteren Ende der Basis 8 in seiner Größe verringert werden.

Einem Ortsbereich am vorderen Ende der Basis 8 kann als Fixposition eine der Markierungen 12, 13 oder 14 zugeordnet werden. Zur Unterscheidung von der gegenständlichen Markierung wird die zugeordnete Fixposition mit dem Bezugszeichen 14' bezeichnet, entsprechend 12' und 13'. Das Feststellen der Position und/oder Bewegung des Portals 6 kann dann relativ zu dieser Fixposition erfolgen, beispielsweise relativ zur Quermarkierung 14, die in diesem Fall eine Fixposition auf der y-Koordinate darstellt. Alternativ zu der Quermarkierung 14 kann die Quermarkierung 12 oder 13 als Fixposition herangezogen werden oder eine anderweitige, hier nicht gezeigte Markierung, die auch virtueller Natur sein kann, die aber in einem festen örtlichen Bezug zu dem vorderen Bereich der Basis 8 steht, in welcher der vordere Ortsbereich definiert wird. Das Feststellen der Position und/oder Bewegung des beweglichen Teils 6 relativ zu der Fixposition 14 ist als Schritt S2 in dem Ablaufschema der Fig. 5 gekennzeichnet. Die Überwachung des Ortsbereiches, beispielsweise hier des vorderen Ortsbereiches am Vorderrand der Basis 8, mit der Überwachungseinrichtung ist als Schritt S1 in dem Ablaufschema der Fig. 5 gekennzeichnet. Die Überwachung des vorderen Ortsbereiches findet, wie bereits erwähnt, mit den Kameras 4, 11 und den zugeordneten Markierungen 12, 13, 14 sowie mit der in Fig. 1 gezeigten Vergleichseinheit 9 statt.

In der Fig. 3 ist der vordere Ortsbereich O1 durch eine gestrichelte Linie abgegrenzt. Entsprechend ist der hintere Ortsbereich O2 durch eine gestrichelte Linie dargestellt. Bei dem hinteren Ortsbereich O2 kann die Position in einer Quermarkierung 15 als Fixposition in y-Richtung festgelegt werden, um die relative Lage des Portals 6 zu dem Ortsbereich O2 festzustellen.

Das Prinzip der Größenveränderung der Ortsbereiche O1 bzw. O2, das oben erläutert wurde anhand des Ortsbereiches O1, ist durch weitere gestrichelte Linien dargestellt, die verkleinerte Ortsbereiche O1', O1" bzw. O2' und O2" umgrenzen. Zur Unterscheidung von der gegenständlichen Markierung 14 bzw. 15 wird die zugeordnete Fixposition als 14' und 15' bezeichnet.

In der Fig. 3 ist ferner das Bildfeld der Kamera 4 und das Bildfeld der Kamera 11 jeweils durch gestrichelte Linien gezeigt, die den jeweiligen Kameras entspringen. Für die Kameras 5 und 10 verhält sich das Bildfeld analog. Fig. 4 zeigt eine seitliche Ansicht, wobei die Blickfelder der Kameras 4 und 10 durch gestrichelte Linien gezeigt sind. Dargestellt sind ferner die Sichtlinien der Kamera 4 auf die Quermarkierung 14, 13 und 12.

Nachfolgend ist beispielhaft gezeigt, wie ein Einstellen oder Verändern die Größe des überwachten Ortsbereiches abhängig von der Position und/oder der Bewegung des beweglichen Teils relativ zu einer Fixposition erfolgen kann.
Es sind gezeigt: Ein kleinster Ortsbereich O1", bei dem nur die Markierung 14 ausgewertet wird, und ein vergrößerter Ortsbereich O1', bei dem zusätzlich zur Markierung 14 auch die Markierung 13 ausgewertet wird. Der Ortsbereich O1' umfasst den Ortsbereich O1". Bei Zugrundelegung des größten Ortsbereiches O1 wird auch die Markierung 12 am vorderen Rand der Basis 8 mit ausgewertet. Bei Bewegung des Portals von links nach rechts wird der Ortsbereich O1" zunächst auf O1' und dann nochmals auf O1 vergrößert, je näher das Portal 6 dem Fixpunkt 14' der Markierung 14 kommt. Solange sich das Portal 6 in der Mitte des Messbereiches befindet, wie in Fig. 4 gezeigt, kann der kleinste Ortsbereich O1" zugrunde gelegt werden oder im Extremfall dieser Ortsbereich sogar auf null verringert werden. Welche der Markierungen 12, 13, 14 ausgewertet werden bzw. welcher Ortsbereich zugrunde gelegt wird, ist also entsprechend der Bewegung des Portals dynamisch veränderbar. Bei Wegbewegen des Portals von dem Fixpunkt 14" können die Ortsbereiche in Umkehrung zu dem o.g. Prinzip schrittweise verkleinert werden. Es ist dann bei Lokalisierung des Portals 6 in der Mitte oder noch weiter zum hinteren, in dieser Ansicht linken Rand der Basis hin egal, ob sich am vorderen Rand, also rechts im Bild, eine Person neben der Basis befindet, da keine Kollisionsgefahr mit dem Portal aktuell gegeben ist.

In Fig. 3 und 4 sind Seitenflächen 21, 22 der Basis sichtbar, ebenso wie in Fig. 2, wo der Blick des Betrachters von vorn auf die Seitenfläche 21 fällt. Auf der Seitenfläche 21 ist die Zielstruktur 12 angeordnet. Ein Seitenbereich der Basis 8 ist ein Bereich, der in diesem Beispiel räumlich an die Seitenfläche 21 anschließt sowie ein Bereich, der an die Seitenfläche 22 räumlich anschließt, anders ausgedrückt ist der Seitenbereich ein Raumbereich vor der jeweiligen Seitenfläche, wenn der Blick des Betrachters auf die Seitenfläche fällt.

In den Fig. 2 und 3 ist weiterhin eine nach oben weisende Fläche 23 der Basis 8 gezeigt. In Fig. 3 fällt der Blick des Betrachters auf diese Fläche 23. Die Zielstrukturen 13, 14, 15, 16 sind auf der nach oben weisenden Fläche angeordnet. Auf oder oberhalb der nach oben weisenden Fläche 23, welche die eigentliche Messtischfläche bildet, sind in diesem Beispiel verschiedene Auflagebereiche der Basis 8 gebildet, die jeweils mit einem erfindungsgemäße Verfahren überwacht werden können. Die Markierungen 13 und 14 bilden im Wesentlichen einen Auflagebereich an einem vorderen Ende der Basis 8 bzw. in der Ansicht der Fig. 3 an einem rechten Ende. Die Markierungen 15 und 16 bilden oder definieren einen weiteren Auflagebereich am entgegengesetzten, in Fig. 3 linken Ende, in Fig. 2 am hinteren Ende der Basis 8.

Ein Seitenbereich und ein Auflagebereich können Teil eines Ortsbereiches sein. In diesem Beispiel sind der Seitenbereich neben der Seitenfläche 21 und der Auflagebereich oberhalb der Markierungen 13 und 14 oberhalb der oben weisenden Fläche 23 Teil des Ortsbereiches O1. Wie vorangehend ausgeführt, kann die Bewegungsgeschwindigkeit des Portals 6 in Abhängigkeit davon gesteuert werden, ob eine Anwesenheit einer Person oder eines Gegenstandes in dem Auflagebereich, also oberhalb der Markierungen 13 und 14 oder in dem Seitenbereich, neben der Markierung 12 festgestellt wird. Insbesondere kann die Geschwindigkeit nur dann beeinflusst, insbesondere herabgesetzt werden, wenn in dem Seitenbereich die Anwesenheit einer Person festgestellt wird, wenn also die Markierung 12 auf dem Bild der Kamera 4 unterbrochen ist, was durch Vergleich mit einem Vergleichsbild festgestellt wird. Im umgekehrten Fall kann die Geschwindigkeit unbeeinflusst bleiben, wenn in diesem Seitenbereich keine Anwesenheit einer Person festgestellt wird und nur ein Werkstück in dem Auflagebereich oberhalb der Markierungen 13 und 14 festgestellt wird, was ebenfalls mit der Kamera 4 durch Auswertung der Markierungen 13 und 14, die zumindest teilweise von dem Werkstück überdeckt sind, festgestellt werden kann.

In Fig. 2 und 3 sind ferner Längsmarkierungen 24, 25, verlaufend in y-Richtung des Gerätekoordinatensystems, auf der nach oben weisenden Fläche der Basis 8 angebracht. Diese Längsmarkierungen 24, 25 werden zur Kontrolle der Position des Portals 6 entlang der y-Achse im Vergleich mit Zählerwerten eines Positionsmesssystems des KMG herangezogen. Es wird von der Überwachungseinrichtung, also speziell von den Kameras, in deren Bildbereich sich die Längsmarkierungen 24, 25 befinden, eine sichtbare Länge der Längsmarkierung auf zumindest einer Seite des Portals ausgewertet. Daraus kann die Position des Portals in y-Richtung, also der Verfahrrichtung des Portals 6, ermittelt werden. Stimmt das Ergebnis der Positionsermittlung mit Hilfe der Markierungen 24 und/oder 25 nicht mit der Position der Position des Portals 6 überein, die von der Steuerung 2 vorgegeben ist oder in der Steuerung 2 ermittelt ist, findet ein Eingriff in die Bewegungsgeschwindigkeit des Portals 6 statt, wobei insbesondere die Bewegung des Portals verlangsamt wird. Zusammenfassend kann also mit Hilfe der Kameras 4, 5, 10, 11 und den Markierungen 24, 25, die mit Hilfe dieser Kameras ausgewertet werden, eine Position und/oder Bewegungsinformation des Portals 6 ermittelt werden, anschließend ein Vergleich zu einer Position und/oder Bewegungsinformation aus der Steuerung 9 vorgenommen werden, und je nach Ergebnis des Vergleichs die Bewegungsgeschwindigkeit des Portals 6 gesteuert werden.

Um die seitliche Zugänglichkeit zu dem KMG für Personen zu überwachen, sind die Leisten 26, 27 an den Seiten des Portals angebracht. Diese Leisten 26, 27 sind ebenfalls Zielstrukturen, die mittels einer oder mehrerer Kameras überwachbar sind. Im vorliegenden Beispiel wird die Leiste 27 mit den Kameras 4, 5 erfasst und die Leiste 26, mit den Kameras 10, 11. Es ist hiermit eine Überwachung möglich, ob eine Person einen vorgegebenen Abstand zu dem Portal 6 unterschreitet. Nähert sich eine Person seitlich dem sich bewegenden Portal und verdeckt dabei eine der Markierungen 26, 27 zumindest teilweise, dann kann die Bewegungsgeschwindigkeit des Portals herabgesetzt werden oder die Portalbewegung angehalten werden. Um eine Freigabe der maximalen Geschwindigkeit zu erhalten, muss die Leiste 27 für die Kamera 4 und 5 sichtbar sein und die Leiste 26 für die Kameras 10 und 11 sichtbar sein. Durch die Bewegung der Leisten 26, 27 mit dem Portal kann eine Quetschgefahr von Personen durch Portal und Werkstück ausgeschlossen werden. Durch die Bewegung des Portals kann auch die Richtigkeit der übertragenen Bilder kontrolliert werden. Es wird die Richtigkeit der übertragenen Bilder durch den Vergleich der Markierungen 25 und 24 mit Bewegungs- oder Ortsdaten aus dem KMG, insbesondere aus der KMG-Steuerung, ermittelt. Es kann also ein Vergleich erfolgen von der mit den Kameras 4,5, 10, 11 ermittelten Position mit der Position, die in dem KMG bekannt oder vorgegeben ist.

Fig. 5 gibt einen Überblick über die Abläufe des oder der erfindungsgemäßen Verfahren, die bereits anhand der obigen Fig. 2 bis 4 erläutert wurden.

Die einzelnen Schritte dieses Beispiels zeigen in kurzer Form ausgedrückt:
S1: Überwachen Ortsbereich
S2: Feststellen der Position und/oder Bewegung des beweglichen Teils
S3: Einstellen der Größe des Ortsbereiches
S4: Feststellen, ob eine Person in dem Ortsbereich anwesend ist
S5: Steuern der Bewegungsgeschwindigkeit des beweglichen Teils

Die Abfolge S1, S2, S3 stellt das Verfahren dar, bei dem zumindest ein Ortsbereich mit der Überwachungseinrichtung überwacht wird (Schritt S1), wobei der überwachte Ortsbereich in seiner Größe veränderlich ist. Im Schritt S2 wird festgestellt, wie die Position des beweglichen Teils des KMG relativ zu einer dem Ortsbereich zugeordneten Fixposition ist oder wie die Bewegung des beweglichen Teils relativ zu dieser Fixposition ist. In Schritt S3 wird eine Einstellung oder Veränderung der Größe des überwachten Ortsbereiches abhängig davon vorgenommen, welche Position und/oder Bewegung des beweglichen Teils, in diesem Beispiel des Portals 6, relativ zu der Fixposition festgestellt wurde. Zusätzlich können die Schritte S4 und S5 hinzutreten, wobei in Schritt S4 festgestellt wird, ob eine Person in dem Ortsbereich anwesend ist und in Schritt S5 die Bewegungsgeschwindigkeit des beweglichen Teils in Abhängigkeit von der Position und/oder der Bewegung des beweglichen Teils relativ zu der Fixposition gesteuert wird, wenn in Schritt S4 die Anwesenheit einer Person oder eines Gegenstandes in dem überwachten Ortsbereich festgestellt wurde. Die Erfindung betrifft generell aber auch ein unabhängiges Verfahren aufweisend die Schritte S1, S4 und S5, d.h. ein Verfahren, bei dem der Ortsbereich nicht variabel groß sein muss, sondern wo die Geschwindigkeit des beweglichen Teils gemäß Schritt S5 bei einem konstant großen Ortsbereich gesteuert werden kann.

## Patentansprüche

1. Verfahren zur Überwachung eines Koordinatenmessgeräts (1), wobei ein Koordinatenmessgerät (1) eingesetzt wird, welches eine Überwachungseinrichtung (4, 5, 9, 10, 11, 12, 13, 14, 15, 16) aufweist, die zur Überwachung zumindest eines Ortsbereichs des KMG eingerichtet ist, in welchen ein bewegliches Teil (6, 7) des KMG bewegbar ist, wobei das Verfahren aufweist:
- Überwachen (S1) des zumindest einen Ortsbereiches (O1, O2) mit der Überwachungseinrichtung (4, 5, 9, 10, 11, 12, 13, 14, 15, 16), wobei der überwachte Ortsbereich (O1, O2) in seiner Größe veränderlich ist,
- Feststellen (S2) der Position des beweglichen Teils (6, 7) des KMG (1) relativ zu einer dem Ortsbereich (O1, O2) zugeordneten Fixposition (14, 15) und/oder feststellen der Bewegung des beweglichen Teils (6, 7) relativ zu der Fixposition (14', 15'),
- Einstellen (S3) oder Verändern der Größe des überwachten Ortsbereiches abhängig von der Position und/oder der Bewegung des beweglichen Teils (6, 7) relativ zu der Fixposition (14', 15').

2. Verfahren nach Anspruch 1, wobei die Größe des überwachten Ortsbereiches mit zunehmendem Abstand des beweglichen Teils (6) zu der Fixposition (14) verringert wird, wobei eine Verringerung des überwachten Ortsbereiches auf Null erfolgen kann, oder die Größe des überwachten Ortsbereiches mit abnehmendem Abstand des beweglichen Teils zu der Fixposition vergrößert wird.

3. Verfahren nach einem der vorangehenden Ansprüche, aufweisend
- Feststellen (S4) mit der Überwachungseinrichtung (4, 5, 9, 10, 11), ob eine Person oder ein Gegenstand in dem überwachten Ortsbereich anwesend ist,
- Steuern (S5) einer Bewegung des beweglichen Teils in Abhängigkeit von der Position und/oder der Bewegung des beweglichen Teils relativ zu der Fixposition, wenn eine Anwesenheit einer Person oder eines Gegenstandes in dem überwachten Ortsbereich festgestellt wird.

4. Verfahren nach einem der vorangehenden Ansprüche, aufweisend
- Überwachen zumindest eines Seitenbereiches einer Basis (8) des KMG und zumindest eines Auflagebereiches der Basis (8), in dem ein Werkstück platzierbar ist, wobei der Seitenbereich und der Auflagebereich Teil des Ortsbereiches sind, wenn der Ortsbereich eine entsprechende Größe aufweist,
- Steuern einer Bewegung des beweglichen Teils in Abhängigkeit davon, ob eine Anwesenheit einer Person oder eines Gegenstandes in dem Auflagebereich und/oder in dem Seitenbereich festgestellt wird.

5. Verfahren nach Anspruch 4, wobei die Bewegungsgeschwindigkeit und/oder Beschleunigung des beweglichen Teils verringert wird, und/oder die Bewegungsrichtung geändert wird, wenn eine Anwesenheit einer Person oder eines Gegenstandes in dem Seitenbereich festgestellt wird.

6. Verfahren nach einem der vorangehenden Ansprüche, wobei mit der Überwachungseinrichtung (4, 5, 10, 11, 24, 25) die Position und/oder Bewegungsinformationen des beweglichen Teils (6, 7) des KMG (1) ermittelt werden.

7. Verfahren nach Anspruch 6, wobei mit der ermittelten Position und/oder der ermittelten Bewegungsinformation das Steuern der Bewegung des beweglichen Teils (6, 7) überwacht wird.

8. Verfahren nach Anspruch 6 oder 7, wobei ein Vergleich vorgenommen wird zwischen
- der mit der Überwachungseinrichtung (4, 5, 10, 11, 24, 25) ermittelten Position und/oder Bewegungsinformationen und
- einer in einer Steuerung (9) des KMG ermittelten oder vorgegebenen Position und/oder in einer Steuerung (9) des KMG ermittelten oder vorgegebenen Bewegungsinformationen.

9. Verfahren nach Anspruch 7 oder 8, wobei die Bewegung des beweglichen Teils (6, 7) abhängig von einer bei dem Vergleich oder der Überwachung ermittelten Differenz gesteuert wird.

10. Verfahren nach einem der vorangehenden Ansprüche, wobei die Überwachungseinrichtung (4, 5, 01, 11, 26, 27) eingerichtet ist zur Überwachung, ob eine Person einen vorgegebenen Abstand zu dem beweglichen Teil (6) unterschreitet, und die Bewegung des beweglichen Teils in Abhängigkeit davon geändert wird, ob der vorgegebene Abstand unterschritten wird.

11. Koordinatenmessgerät (1), aufweisend,
- eine Basis (8) mit Seitenflächen und einer nach oben weisenden Fläche zur Aufnahme eines Werkstücks,
- zumindest ein bewegliches Teil (6, 7),
- eine Überwachungseinrichung, aufweisend zumindest eine Bildaufnahmeeinheit (4, 5, 10, 11),
- zumindest eine Zielstruktur (12, 13, 14, 15, 16, 24, 25, 26, 27), deren Abbild von der Bildaufnahmeeinheit aufnehmbar ist, wobei das Abbild der Zielstruktur veränderbar ist, wenn in dem Abbild die Zielstruktur zumindest teilweise von einer Person oder einem Objekt verdeckt wird,
- zumindest eine Vergleichseinrichtung (9), die dazu eingerichtet ist, das aufgenommene Abbild mit einem Vergleichsabbild zu vergleichen, wobei das Vergleichsabbild ein Abbild ist, in dem kein Teil der Zielstruktur von einer Person oder einem Objekt verdeckt ist.

12. Koordinatenmessgerät nach Anspruch 11, wobei eine oder mehrere Zielstrukturen (12) an zumindest einer Seitenfläche (21, 22) der Basis (8) angeordnet sind.

13. Koordinatenmessgerät nach Anspruch 11 oder 12, wobei eine oder mehrere Zielstrukturen (13, 14, 15, 16) auf der nach oben weisenden Fläche (23) der Basis (8) angeordnet sind.

14. Koordinatenmessgerät nach einem der Ansprüche 11-13, wobei eine oder mehrere Zielstrukturen (26, 27) an dem beweglichen Teil (6) angeordnet sind.

15. Koordinatenmessgerät nach einem der Ansprüche 11-14, wobei die Zielstruktur (12, 13, 14, 15, 16, 24, 25, 26, 27) eine Markierung ist.

16. Koordinatenmessgerät nach einem der Ansprüche 11-15, aufweisend eine Steuerungseinrichtung (2), die dazu eingerichtet ist,
- die Größe eines überwachten Ortsbereiches (O1, O2) zu steuern, und/oder
- eine Bewegung des beweglichen Teils (6, 7) in Abhängigkeit von einer Position und/oder einer Bewegung des beweglichen Teils (6, 7) relativ zu einer Fixposition (14, 15) zu steuern, wenn eine Anwesenheit der Person oder des Objekts in dem überwachten Ortsbereich (O1, O2) festgestellt wird, und/oder
- eine Bewegung des beweglichen Teils (6, 7) in Abhängigkeit davon zu steuern, ob eine Anwesenheit der Person oder eines Gegenstandes in einem Auflagebereich einer Basis (8) des KMG und/oder in dem Seitenbereich einer Basis (8) des KMG festgestellt wird.

17. Koordinatenmessgerät nach einem der Ansprüche 11-16, das zur Durchführung eines Verfahrens nach einem der Ansprüche 1-10 eingerichtet ist.

## Claims

1. Method for monitoring a coordinate-measuring machine (1), wherein a coordinate-measuring machine (1) is used which has a monitoring device (4, 5, 9, 10, 11, 12, 13, 14, 15, 16) which is set up to monitor at least one location region of the CMM, in which a movable part (6, 7) of the CMM is movable, wherein the method includes:
- monitoring (S1) the at least one location region (O1, O2) with the monitoring device (4, 5, 9, 10, 11, 12, 13, 14, 15, 16), wherein the monitored location region (O1, O2) is variable in terms of its size,
- ascertaining (S2) the position of the movable part (6, 7) of the CMM (1) relative to a fixed position (14, 15) associated with the location region (O1, O2) and/or ascertaining the movement of the movable part (6, 7) relative to the fixed position (14', 15'),
- setting (S3) or varying the size of the monitored location region in dependence on the position and/or the movement of the movable part (6, 7) relative to the fixed position (14', 15').

2. Method according to Claim 1, wherein the size of the monitored location region is decreased as the distance of the movable part (6) from the fixed position (14) increases, wherein a decrease of the monitored location region to zero can take place, or the size of the monitored location region is increased as the distance of the movable part from the fixed position decreases.

3. Method according to one of the preceding claims, including
- ascertaining (S4) with the monitoring device (4, 5, 9, 10, 11) whether a person or an object is present in the monitored location region,
- controlling (S5) a movement of the movable part in dependence on the position and/or the movement of the movable part relative to the fixed position if the presence of a person or an object in the monitored location region is ascertained.

4. Method according to one of the preceding claims, including
- monitoring at least a side region of a main body (8) of the CMM and at least one placement region of the main body (8), in which a workpiece may be placed, wherein the side region and the placement region are part of the location region if the location region is of a corresponding size,
- controlling a movement of the movable part in dependence on whether the presence of a person or of an object in the placement region and/or in the side region has been ascertained.

5. Method according to Claim 4, wherein the movement speed and/or acceleration of the movable part is reduced, and/or the movement direction is changed, if the presence of a person or of an object in the side region is ascertained.

6. Method according to one of the preceding claims, wherein the monitoring device (4, 5, 10, 11, 24, 25) is used to ascertain the position and/or movement information of the movable part (6, 7) of the CMM (1).

7. Method according to Claim 6, wherein the established position and/or the established movement information are used to monitor the controlling of the movement of the movable part (6, 7) .

8. Method according to Claim 6 or 7, wherein a comparison is effected between
- the position and/or movement information established using the monitoring device (4, 5, 10, 11, 24, 25), and
- a position that has been established in a controller (9) of the CMM or is specified, and/or movement information that has been established in a controller (9) of the CMM or is specified.

9. Method according to Claim 7 or 8, wherein the movement of the movable part (6, 7) is controlled in dependence on a difference ascertained in the comparison or the monitoring.

10. Method according to one of the preceding claims, wherein the monitoring device (4, 5, 01, 11, 26, 27) is set up to monitor whether a person is at a distance from the movable part (6) that is less than a specified distance, and the movement of the movable part is changed in dependence on whether the distance is less than the specified distance.

11. Coordinate-measuring machine (1), including
- a main body (8) having side faces and a surface, which points upward, for holding a workpiece,
- at least one movable part (6, 7),
- a monitoring device having at least one image recording unit (4, 5, 10, 11),
- at least one target structure (12, 13, 14, 15, 16, 24, 25, 26, 27), the image of which is recordable by the image recording unit, wherein the image of the target structure is variable if the target structure in the image is at least partially concealed by a person or an object,
- at least one comparison device (9) that is set up to compare the recorded image to a comparison image, wherein the comparison image is an image in which no part of the target structure is concealed by a person or an object.

12. Coordinate-measuring machine according to Claim 11, wherein one or more target structures (12) are arranged on at least one side face (21, 22) of the main body (8).

13. Coordinate-measuring machine according to Claim 11 or 12, wherein one or more target structures (13, 14, 15, 16) are arranged on the surface (23), which faces upward, of the main body (8).

14. Coordinate-measuring machine according to one of Claims 11-13, wherein one or more target structures (26, 27) are arranged on the movable part (6).

15. Coordinate-measuring machine according to one of Claims 11-14, wherein the target structure (12, 13, 14, 15, 16, 24, 25, 26, 27) is a mark.

16. Coordinate-measuring machine according to one of Claims 11-15, having a control device (2) that is set up for
- controlling the size of a monitored location region (O1, O2), and/or
- controlling a movement of the movable part (6, 7) in dependence on a position and/or a movement of the movable part (6, 7) relative to a fixed position (14, 15) if the presence of the person or the object in the monitored location region (O1, O2) is ascertained, and/or
- controlling a movement of the movable part (6, 7) in dependence on whether the presence of the person or of an object in a placement region of a main body (8) of the CMM and/or in the side region of a main body (8) of the CMM has been ascertained.

17. Coordinate-measuring machine according to one of Claims 11-16, which is set up for performing a method according to one of Claims 1-10.

## Revendications

1. Procédé pour la surveillance d'un système de mesure de coordonnées (1), dans lequel un système de mesure de coordonnées (1) est utilisé, lequel comporte un dispositif de surveillance (4, 5, 9, 10, 11, 12, 13, 14, 15, 16) qui est disposé pour surveiller au moins une zone locale du SMC, une partie mobile (6, 7) du SMC pouvant être déplacée, dans lequel le procédé comporte :
- la surveillance (S1) de l'au moins une zone locale (O1, O2) avec le dispositif de surveillance (4, 5, 9, 10, 11, 12, 13, 14, 15, 16), dans lequel la taille de la zone locale surveillée (O1, O2) est modifiable,
- la détermination (S2) de la position de la partie mobile (6, 7) du SMC (1) par rapport à une position fixe (14, 15) ordonnée à la zone locale (O1, O2) et/ou la détermination du mouvement de la partie mobile (6, 7) par rapport à la position fixe (14', 15'),
- le réglage (S3) ou la modification de la taille de la zone locale surveillée en fonction de la position et/ou du mouvement de la partie mobile (6, 7) par rapport à la position fixe (14', 15').

2. Procédé selon la revendication 1, dans lequel la taille de la zone locale surveillée se réduit à mesure que la distance de la partie mobile (6) à la position fixe (14) augmente, dans lequel la zone locale surveillée peut être réduite à zéro, ou la taille de la zone locale surveillée s'accroît à mesure que la distance de la partie mobile à la position fixe diminue.

3. Procédé selon l'une des revendications précédentes, comportant
- la détermination (S4) avec le dispositif de surveillance (4, 5, 9, 10, 11) de la présence d'une personne ou d'un objet dans la zone locale surveillée,
- la commande (S5) d'un mouvement de la partie mobile en fonction de la position et/ou du mouvement de la partie mobile par rapport à la position fixe, lorsqu'une présence d'une personne ou d'un objet dans la zone locale surveillée est déterminée.

4. Procédé selon l'une des revendications précédentes, comportant
- la surveillance d'au moins une zone latérale d'un socle (8) du SMC et d'au moins une zone d'appui du socle (8), la pièce pouvant y être placée, dans lequel la zone latérale et la zone d'appui font partie de la zone locale, lorsque la zone locale présente une taille correspondante,
- la commande d'un mouvement de la partie mobile selon que la présence d'une personne ou d'un objet dans la zone latérale et/ou dans la zone d'appui est déterminée.

5. Procédé selon la revendication 4, dans lequel la vitesse du mouvement et/ou l'accélération de la partie mobile se réduisent, et/ou la direction du mouvement est modifiée, lorsqu'une présence d'une personne ou d'un objet dans la zone latérale est déterminée.

6. Procédé selon l'une des revendications précédentes, dans lequel la position et/ou les informations de mouvement de la partie mobile (6, 7) du SMC (1) sont approximées à l'aide du dispositif de surveillance (4, 5, 10, 11, 24, 25).

7. Procédé selon la revendication 6, dans lequel la commande du mouvement de la partie mobile est surveillée à l'aide de la position approximée et/ou à l'aide des informations de mouvement approximées de la partie mobile (6, 7).

8. Procédé selon la revendication 6 ou 7, dans lequel une comparaison est effectuée entre
- la position approximée et/ou les informations de mouvement approximées à l'aide du dispositif de surveillance (4, 5, 10, 11, 24, 25) et
- une position approximée dans une commande (9) du SMC ou prédéfinie et/ou des informations de mouvement approximées dans une commande (9) du SMC ou prédéfinies.

9. Procédé selon la revendication 7 ou 8, dans lequel le mouvement de la partie mobile (6, 7) est commandé en fonction d'une différence approximée lors de la comparaison ou de la surveillance.

10. Procédé selon l'une des revendications précédentes, dans lequel le dispositif de surveillance (4, 5, 01, 11, 26, 27) est disposé pour la surveillance du sous-dépassement par une personne d'une distance prédéfinie à la partie mobile (6) et dans lequel le mouvement de la partie mobile est modifié en fonction du sous-dépassement de la distance prédéfinie.

11. Système de mesure de coordonnées (1), comportant
- un socle (8) doté de surfaces latérales et d'une surface orientée vers le haut pour la réception d'une pièce,
- au moins une partie mobile (6, 7),
- un dispositif de surveillance, comportant au moins une unité de prise de vue (4, 5, 10, 11),
- au moins une structure cible (12, 13, 14, 15, 16, 24, 25, 26, 27), dont l'image peut être acquise par l'unité de prise de vue, dans lequel l'image de la structure cible est modifiable, lorsque la structure cible est dissimulée au moins partiellement dans l'image par une personne ou un objet,
- au moins un dispositif comparateur (9), disposé de façon à comparer l'image acquise avec une image de référence, dans lequel l'image de comparaison est une image où aucune partie de la structure cible n'est dissimulée par une personne ou un objet.

12. Système de mesure de coordonnées selon la revendication 11, dans lequel une ou plusieurs structures cibles (12) sont agencées sur au moins une surface latérale (21, 22) du socle (8).

13. Système de mesure de coordonnées selon la revendication 11 ou 12, dans lequel une ou plusieurs structures cibles (13, 14, 15, 16) sont agencées sur la surface orientée vers le haut (23) du socle (8).

14. Système de mesure de coordonnées selon l'une des revendications 11 à 13, dans lequel une ou plusieurs structures cibles (26, 27) sont agencées sur la partie mobile (6).

15. Système de mesure de coordonnées selon l'une des revendications 11 à 14, dans lequel la structure cible (12, 13, 14, 15, 16, 24, 25, 26, 27) est un marquage.

16. Système de mesure de coordonnées selon l'une des revendications 11 à 15, comportant un dispositif de commande (2), disposé de façon à
- commander la taille d'une zone locale surveillée (01, 02), et/ou
- commander un mouvement de la partie mobile (6, 7) en fonction d'une position et/ou un mouvement de la partie mobile (6, 7) par rapport à une position fixe (14, 15), lorsqu'une présence de la personne ou de l'objet dans la zone locale surveillée (O1, O2) est déterminée, et/ou
- commander un mouvement de la partie mobile (6, 7) selon qu'une présence de la personne ou d'un objet est déterminée dans une zone d'appui d'un socle (8) du SMC et/ou dans la zone latérale d'un socle (8) du SMC.

17. Système de mesure de coordonnées selon l'une des revendications 11 à 16, disposé de façon à mettre en oeuvre un procédé selon l'une des revendications 1 à 10.
